# EUROPEAN PATENT SPECIFICATION

(11) **EP 1 035 348 B1**
(45) Date of publication and mention of the grant of the patent: **18.12.2002**
(21) Application number: 00107657.9
(22) Date of filing: 06.10.1995
(51) Int. Cl.: F16F 1/02, F16F 15/121, F16F 1/18

(54) **Undulated spring and damper mechanism**
Wellenförmige Feder und Dämpfungsmechanismus
Mécanisme amortisseur à ressort ondulé

(30) Priority: 14.10.1994 JP 24963694; 14.10.1994 JP 24963794; 14.10.1994 JP 24963894; 14.10.1994 JP 24963994; 07.04.1995 JP 8219195; 18.04.1995 JP 9223295
(43) Date of publication of application: 13.09.2000
(62) Divisional of application: 95307115.6
(73) Proprietor: EXEDY CORPORATION, Neyagawa-shi, Osaka 572 (JP)
(72) Inventor: Okubo, Mamoru, Neyagawa-shi, Osaka (JP); Fukushima, Hirotaka, Hirakata-shi, Osaka (JP)
(74) Representative: Pacitti, Paolo

(56) References cited:
- BE-A- 345 632
- DE-A- 4 336 178
- DE-B- 1 233 215
- FR-A- 497 546
- FR-E- 22 636
- US-A- 2 247 839
- US-A- 2 775 105
- US-A- 3 115 337
- US-A- 4 252 302
- US-A- 4 257 510
- PATENT ABSTRACTS OF JAPAN vol. 18, no. 444 (M-1658), 18 August 1994 (1994-08-18) & JP 06 137341 A (DAIKIN), 17 May 1994 (1994-05-17)
- PATENT ABSTRACTS OF JAPAN vol. 015, no. 374 (M-1160), 20 September 1991 (1991-09-20) & JP 03 149417 A (KAYSEVEN CO LTD), 26 June 1991 (1991-06-26)

## Description

### FIELD OF THE INVENTION

The present invention relates to an undulated spring, the spring being suitable for use in a damper mechanism.

### DESCRIPTION OF THE RELATED ART

Damper disc assemblies are generally found in clutch discs and some flywheel mechanisms. In a damper disc assembly, generally, a power input element receives torque from an engine and a power output element transmits the torque to a power output shaft. The power input element and the power output element are typically coupled together by an elastic element.
The elastic element can be elastically deformed in circular directions between the power input element and the power output element. Often damper mechanisms also include the elastic element and a hysteresis torque generating mechanism. When torsional vibration is received, the elastic element repeats expansion and contraction in circular directions and may oscillate continuously for a period of time in the absence of the hysteresis torque generating mechanism. With the hysteresis torque included, oscillations are reduced.

Usually coil springs are used for the elastic element.

However, one damper mechanism does use an undulated spring. This damper mechanism is disclosed in Japanese Unexamined Patent Publication Number 6-137341. The undulated plate spring includes a plurality of arcuate portions and a plurality of lever portions connecting the arcuate portions in series. Since the undulated plate spring develops a large amount of elastic energy in unit capacity, it can minimise a widthwise dimension while retaining a sufficient level of torque transmitting capacity.

However, in the prior art, the lever portions of the undulated spring tend to deform. There is little bending moment acting on arcuate portions of the spring, and hence, the arcuate portions are not sufficiently elastically deformed during vibration dampening. Hence, the arcuate portions may not be effectively absorbing vibrations.

Further, the undulated plate spring in the prior art is formed of a single plate material which causes difficulty in processing, and this leads to increased fabrication costs. For example, it is necessary to bend the plate material in directions of expansion and contraction of springs in order to form the undulated plate spring, and load of bending the whole plate is so large that it appears that a large-sized machine must be used in the manufacturing process. In addition to that, the material used to make the spring must be of a uniform thickness in order to allow for reduced manufacturing costs.

### SUMMARY OF THE INVENTION

The present invention relates to an undulated spring formed of:
a single, continuous, elongated, ribbon-like, first undulated plate spring element having a generally continuous thickness throughout its length formed with the lever portions and the fold portions; and
the undulated spring having a plurality of second undulated plate spring elements, each second undulated plate spring element having an arcuate portion and a second lever portion, the plurality of second undulated plate spring elements arranged such that one of the arcuate portions is disposed within one of the fold portions in the first undulated plate spring element and the second lever portions extend at least partially along a length of the lever portions of the first undulated plate spring element.

In another aspect of the present invention, the undulated plate spring includes a first plate spring made from a generally flat elongated strip material, the first plate spring formed with a plurality of first arcuate portions having first opening portions, and a plurality of first lever portions formed integrally adjacent to the first opening portions of the first arcuate portions connecting the first arcuate portions in a zigzag configuration, and a plurality of second plate springs, each second plate spring formed with a single second arcuate portion and two second lever portions extending therefrom, each of the second arcuate portion disposed within the first arcuate portions and the second lever portions extending along the first lever portions.

### BRIEF DESCRIPTION OF THE DRAWINGS

Fig. 1 is a view of a clutch disc assembly having an undulated plate spring in accordance the present invention;
Fig. 2 is a fragmentary front view of portions of the undulated plate spring depicted in Fig. 1, shown removed from the clutch disc assembly, on an enlarged scale.

### DETAILED DESCRIPTION OF THE PREFERRED EMBODIMENTS

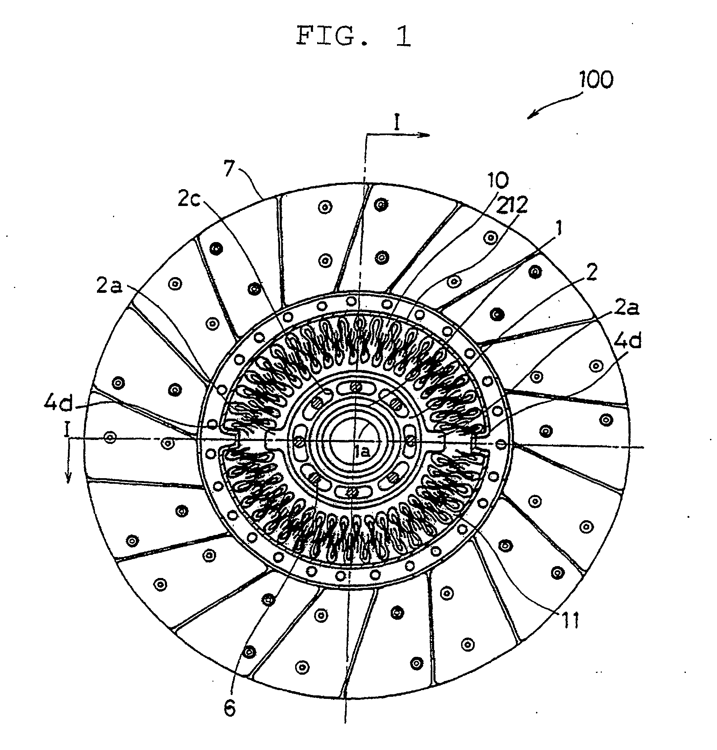

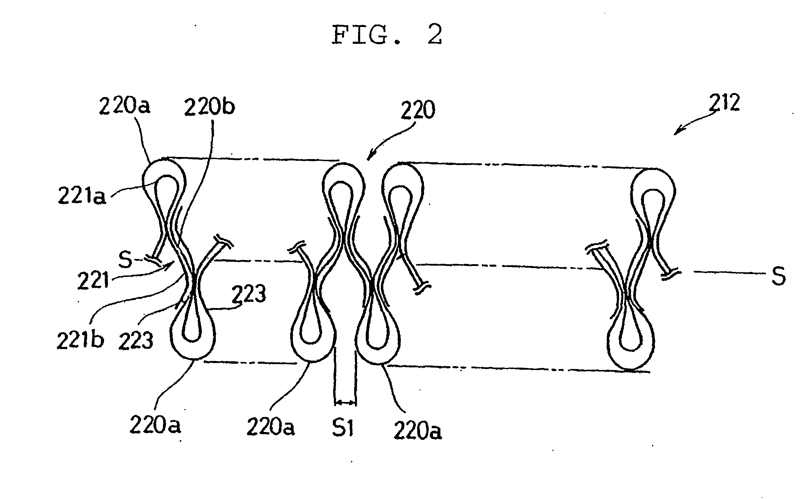

Referring to Figs. 1 and 2, a pair of undulated plate springs 212 are disposed within the fluid chamber 10. The undulated plate springs 212 are semi-circularly arranged and are capable of flexing in a wide angle of displacement between the plates 4 and 5 and the hub 1.

One of the undulated plate springs 212 is shown in Fig. 2 removed from the clutch disc assembly 100. The spring 212 includes a first plate spring element 220 and a plurality of second plate springs 221 attached in positions to the first plate spring 220, as shown in Fig. 2. The first plate spring 220 is a single continuous element with a plurality of arcuate elements 220a and lever elements 220b coupling the arcuate elements 220a formed therein. The arcuate elements 220a are alternately staggered, with every other arcuate element 220a being adjacent to each other. The arcuate elements 220a have opening portions 223 which are open toward an opposite arcuate element. The lever elements 220b extend between adjacent opening portions 223 of the arcuate elements 220.

The arcuate elements 220a are annular or semicircular in shape and all of the arcuate elements 220a are generally the same in diameter, and a clearance gap S₁ of a specified length lies between adjacent ones of the arcuate elements 220a. When the undulated plate springs 212 are disposed in the fluid chamber 10 of the clutch disc assembly, the undulated plate springs 212 are elastically deformed into an arc-shaped arrangement, as shown in Fig. 1. The radially inner of the opening portions 223 are tightly in contact with each other when the spring is disposed within the fluid chamber 10. The radially outward of the opening portions 223 may be slightly separated from one another due to the arcuate shape forced upon the undulated plate springs 212 when in the fluid chamber 10.

The second plate springs 221 are partially disposed within the arcuate shaped elements 220a as shown in Fig. 2. The second plate springs 221 include second arcuate elements 221a placed within the first arcuate elements 220a, and second lever elements 221b extending from the second arcuate elements 220a along the first lever elements 220b. The second lever elements 221 extend beyond connection portions of the first arcuate elements 220a and the second lever elements 220b toward the first arcuate elements 220a. In this way, the second lever elements 221b lie on opposite sides of the first lever elements 220b.

The first arcuate elements 220a in opposite ends of the first plate spring 220 are accommodated within the fluid chamber 10 while they are in contact with the projections 2a and the engagement portions 4b. In the fluid chamber 10, the undulated plate springs 212 define a specified clearance gap by and between the retaining plate 4, the clutch plate 5 and the flange 2.

An operation of the clutch disc assembly will be described in conjunction with a situation where the undulated plate springs 212 are compressed. In compression of the undulated plate springs 212, an open angle of the first lever elements 220a becomes smaller, and bending moment acts on the first arcuate elements 220a. Under this condition, the first lever elements 220b are displaced with fulcrums of the opening portions 223 together with the second lever elements 221b of the second plate springs 221. Since the second lever elements 221b are placed on opposite sides of the first lever elements 220b, an amount of elastic deformation of the first lever elements 220b is reduced. Then, the first arcuate elements 220a are elastically deformed to retain elastic energy. An amount of displacement of the second arcuate elements 220a is increased because the second plate springs 221 are not placed around the first arcuate elements 220a, and therefore, the first arcuate elements 220a retain a larger amount of elastic energy. The undulated plate springs 212 are especially small in widthwise dimension, and thus, the elastic energy retained in unit capacity of the undulated plate springs 212 is greater than that of the conventional coil springs.

In addition to that, damper oil 11 in the fluid chamber 10 lubricates the undulated plate springs 212, the plates 4 and 5, and the flange 2, and this promotes smooth expansion and contraction of the undulated plate springs 212 and prevents abrasion of the components.

As has been described, in accordance with the present invention, the undulated plate springs 212 have the merits of maintaining rigidity as low as the conventional coil springs and of a diminished widthwise dimension in axial directions, and this enables the clutch disc assembly 100 to be minimised in a dimension in axial directions.

The second lever elements 221b of the second plate springs 221 extend to sides of connection portions of the first arcuate elements 220a and first lever elements 220b of the first plate spring 220. As can be seen in Fig. 2, the second lever elements 221b are disposed on opposite sides of the connection portions. The connection portions are parts where stress tends to develop the most upon expansion and contraction of the undulated plate springs 212. The second lever elements 221b receiving the stress, bending moment upon the first arcuate elements 220a can be increased.

As has been described, in this embodiment, a combination of the first plate spring 220 uniform in thickness with the second plate springs 221 also uniform in thickness can implement functions equivalent to those of the undulated plate springs varied in thickness. As a result, a step of a fabrication process of shaping a plate material in wave form is no longer needed. Thus, a process fabricating the undulated plate spring is simplified, and a fabrication cost is reduced.

It should be understood that the second arcuate elements 221a may be discontinuous. Further it is possible that the length of the second lever elements 221b may be varied depending upon the desired characteristic.

Various details of the invention may be changed without departing from its spirit nor its scope. Furthermore, the foregoing description of the embodiment according to the present invention is provided for the purpose of illustration only, and not for the purpose of limiting the invention as defined by the appended claims and their equivalents.

## Claims

1. An undulated spring for a damper mechanism, the spring (212) comprising:
a single, continuous, elongated, ribbon-like, first undulated plate spring element (220) having a generally continuous thickness throughout its length formed with lever portions (220b) and fold portions (220a); and
said undulated spring (212) having a plurality of second undulated plate spring elements (221), each second undulated plate spring element (221) having an arcuate portion (221a) and a second lever portion (221b), said plurality of second undulated plate spring elements (221) arranged such that one of said arcuate portions (221a) is disposed within one of said fold portions (220a) in said first undulated plate spring element (220) and said second lever portions (221b) extend at least partially along a length of said lever portions (220b) of said first undulated plate spring element (220).

2. An undulated plate spring, comprising:
a first plate spring (220) made from a generally flat elongated strip material, said first plate spring (220) formed with a plurality of first arcuate portions (220a) having first opening portions (223), and a plurality of first lever portions (220b) formed integrally adjacent to said first opening portions (223) of said first arcuate portions (220a) connecting the first arcuate portions (220a) in a zigzag configuration, and a plurality of second plate springs (221), each second plate spring (221) formed with a single second arcuate portion (221a) and two second lever portions (221b) extending therefrom, each of said second arcuate portions (221a) disposed within said first arcuate portions (220a) and said second lever portions (221b) extending along said first lever portions (220b).

## Patentansprüche

1. Eine wellenförmige Feder für einen Dämpfungsmechanismus, wobei die Feder (212) aus Folgendem besteht:
einem einzelnen, kontinuierlichen, verlängerten, bandartigen, ersten wellenförmigen Blattfederelement (220), das in seiner ganzen Länge im Allgemeinen kontinuierlich dick ist und mit Hebelteilen (220b) und Falzteilen (220a) geformt ist; und
wobei die wellenförmige Feder (212) eine Vielzahl von zweiten wellenförmigen Blattfederelementen (221) aufweist, wobei jedes zweite wellenförmige Blattfederelement (221) ein bogenförmiges Teil (221a) und ein zweites Hebelteil (221b) aufweist, wobei die Vielzahl der zweiten, wellenförmigen Blattfederelemente (221) so angeordnet ist, dass eines der bogenförmigen Teile (221a) in einem der Falzteile (220a) in dem ersten wellenförmigen Blattfederelement (220) angebracht ist und wobei die zweiten Hebelteile (221b) sich zumindest teilweise entlang einer Länge der Hebelteile (220b) des ersten wellenförmigen Blattfederelements (220) erstrecken.

2. Eine wellenförmige Blattfeder, die aus Folgendem besteht:
einer ersten Blattfeder (220), die aus einem im Allgemeinen flachen, verlängerten Streifenmaterial hergestellt ist, wobei die erste Blattfeder (220) aus Folgendem geformt ist: einer Vielzahl erster bogenförmiger Teile (220a) mit ersten Öffnungsteilen (223) und einer Vielzahl erster Hebelteile (220b), die integral angrenzend an die ersten Öffnungsteile (223) der ersten bogenförmigen Teile (220a) geformt sind und die ersten bogenförmigen Teile (220a) in einer Zickzack-Konfiguration miteinander verbinden, und einer Vielzahl zweiter Blattfedern (221), wobei jede zweite Blattfeder (221) aus einem einzelnen, zweiten bogenförmigen Teil (221a) und zwei sich von diesem erstreckenden zweiten Hebelteilen (221b) geformt ist,
wobei jedes dieser zweiten bogenförmigen Teile (221a) in den ersten bogenförmigen Teilen (220a) angebracht ist und sich die zweiten Hebelteile (221b) an den ersten Hebelteilen (220b) entlang erstrecken.

## Revendications

1. Un ressort ondulé pour un mécanisme amortisseur, le ressort (212) comprenant :
un premier élément constituant ressort à lames ondulé, semblable à un ruban, allongé, continu et unique (220) ayant une épaisseur généralement continue sur toute sa longueur, formé de portions leviers (220b) et de portions plis (220a) ; et
ledit ressort ondulé (212) ayant une pluralité de deuxièmes éléments constituant ressorts à lames ondulés (221), chaque deuxième élément constituant ressort à lames ondulé (221) ayant une portion arquée (221a) et une deuxième portion levier (221b), ladite pluralité de deuxièmes éléments constituant ressorts à lames ondulés (221) agencés de telle sorte que l'une desdites portions arquées (221a) soit disposée à l'intérieur de l'une desdites portions plis (220a) dans ledit premier élément constituant ressort à lames ondulé (220) et lesdites deuxièmes portions leviers (221b) se prolongent au moins partiellement sur une longueur desdites portions leviers (220b) dudit premier élément constituant ressort à lames ondulé (220).

2. Un ressort à lames ondulé, comprenant :
un premier ressort à lames (220) fabriqué à partir d'une bande de matériau généralement plate et allongée, ledit premier ressort à lames (220) formé d'une pluralité de premières portions arquées (220a) ayant des premières portions d'ouverture (223), et d'une pluralité de premières portions leviers (220b) formées de façon solidaire et qui sont adjacentes auxdites premières portions d'ouverture (223) desdites premières portions arquées (220a) raccordant les premières portions arquées (220a) en une conformation en zigzag, et une pluralité de deuxièmes ressorts à lames (221), chaque deuxième ressort à lames (221) formé d'une deuxième portion arquée unique (221a) et de deux deuxièmes portions leviers (221b) se prolongeant depuis celle-ci, chacune desdites deuxièmes portions arquées (221a) disposée à l'intérieur desdites premières portions arquées (220a) et lesdites deuxièmes portions leviers (221b) se prolongeant le long desdites premières portions leviers (220b).
